(19) Europäisches Patentamt
European Patent Office
Office européen des brevets

(11) **EP 0 419 217 B1**

(12) **EUROPEAN PATENT SPECIFICATION**

(45) Date of publication and mention
of the grant of the patent:
**18.12.1996 Bulletin 1996/51**

(51) Int Cl.6: **H02M 1/12**

(21) Application number: **90310210.1**

(22) Date of filing: **18.09.1990**

(54) **Thyristor converter system with higher harmonics suppression**

Thyristorwandlersystem mit Unterdrückung von Oberwellen

Système convertisseur à thyristor avec suppression des harmoniques

(84) Designated Contracting States:
**CH DE GB LI SE**

(30) Priority: **18.09.1989 JP 239837/89**

(43) Date of publication of application:
**27.03.1991 Bulletin 1991/13**

(73) Proprietor: **MITSUBISHI DENKI KABUSHIKI KAISHA**
**Tokyo (JP)**

(72) Inventors:
• **Terada, Makoto, C/o Mitsubishi Denki K.K.**
**Tokyo (JP)**
• **Furo, Isao, C/o Mitsubishi Denki K.K.**
**Tokyo (JP)**
• **Suzuki, Hiroshi, C/o Mitsubishi Denki K.K.**
**Tokyo (JP)**
• **Iyoda, Isao, C/o Mitsubishi Denki K.K.**
**Tokyo (JP)**

(74) Representative: **Mounteney, Simon James et al**
**MARKS & CLERK,**
**57-60 Lincoln's Inn Fields**
**London WC2A 3LS (GB)**

(56) References cited:
**EP-A- 0 254 073**

• **PATENT ABSTRACTS OF JAPAN, vol. 5, no. 51 (E-51)[723], 10th April 1981; & JP-A-56 3574**
• **18TH IEEE POWER ELECTRONICS SPECIALISTS CONFERENCE, Blacksburg, Virginia, 1987, pages 204-212; F.Z. PENG et al.: "A study of active power filters using quad-series voltage-source PWM converters for harmonic compensation"**

Remarks:
The file contains technical information submitted after the application was filed and not included in this specification

## Description

BACKGROUND OF THE INVENTION

This invention relates to converter systems for converting AC power into DC power with supression of higher harmonics at the installation point.

In the case where semiconductor converter circuits, such as inverters, bridge thyristor converters, thyrister motors utilizing cyclo-converters, etc., are coupled directly to power supply systems, higher harmonics generated by the converter circuits flow into the power system which ususally have smaller impedance, thereby generating a harmonic distortion in the source power supply. Thus, voltages having harmonic distortions are supplied to the loads connected to the power supply system. These higher harmonics may overheat the electrical components, especially capacitors, supplied therewith, sometimes giving rise to insulation failures. When, on the other hand, reactors are coupled in series with the capacitors for preventing the higher harmonics from flowing into the capacitors, abnormal noise or temperature rise may be observed in such reactors.

For the purpose of reducing the damage caused by the higher harmonics, passive filters consisting of passive elements such as reactors and capacitors, or active filters consisting of active elements, are utilized. These filters, however, have some resistance, which increases insertion energy loss and thus reduces the efficiency of the system.

Fig. 1 shows a conventional system for suppressing higher harmonics (EP-A-0254073). To an intermediate node point 4 between the power supply side 1 and a load side 2, coupled a branch line 3 for the higher harmonics suppressing system. The outputs of the instrument transformers 40, 41, and 42, which detect the voltage at the branch point, the load current at the side of the user load, and the current at the power system side, respectivly, are introduced to the measurement/monitor/control circuit 5, which measures and monitors the higher harmonics. A main filter circuit 6 connected to the node 4 for absorbing the higher harmonics is controlled by the control circuit 5.

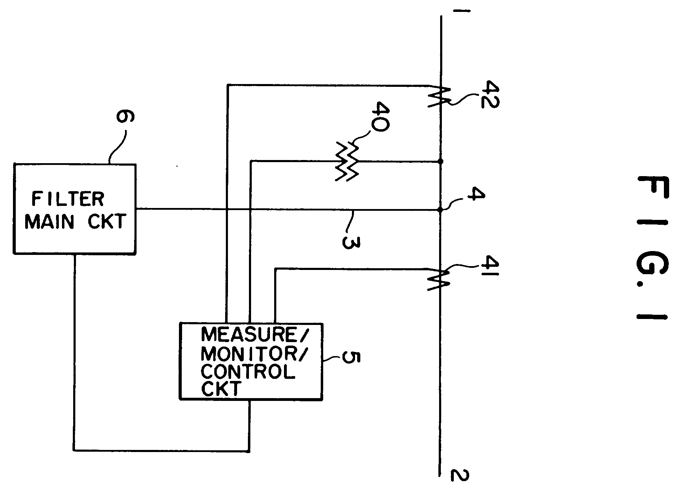

In the system of Fig. 1, the higher harmonics being generated from electrical components connected to the user load side 2 and flowing into the power supply side 1 are branched into the filter circuit 6 to be absorbed therein. Thus, the higher harmonics contents flowing into the power supply side 1 are reduced.

This system for suppressing the higher harmonics is good per se, both in principle and in practical operation. However, the cost of installation may become substantial if such systems are to be provided for each one of the loads connected to the power supply system.

Among the loads coupled to the power source, there are those which require fine waveform control that is effected by means of inverters, cyclo-converters, or the like. However, there are also loads with large inertia, such as electrical resistance heaters or electrolytic cell loads, for which small fluctuations does not matter and only the time integral of the power or that of current supplied thereto is significant for their operation. In the case of these loads, small fluctuations in the waveform have little effect on the operations thereof. Namely, if the loads are responsive only to the amount of heat or electric quantity which corresponds to the time integral of the power or current, the instantaneous flucutations in the waveforms are filtered and smoothed due to the integrating operation, and hence have no vital effect.

SUMMARY OF THE INVENTION

It is therefore a primary object of this invention to provide a simple and inexpensive converter system for converting an AC power supplied from an AC power source into a DC power supplied to a branch system load tolerant of high frequency deviation, wherein the generation of higher harmonics is effectively suppressed.

According to the present invention, there is provided a converter system for higher harmonics suppression, adapted to be coupled between an AC power source and loads, said converter system comprising:

measurement means for measuring electrical parameters at the power source side and the loads side;
control circuit means, having inputs coupled to outputs of the measurement means and outputs coupled to high harmonic frequency absorption means, wherein the control circuit means is operative for controlling the high harmonic frequency absorption means to reduce higher harmonics contained in the power source side, the high harmonic frequency absorption means also being operative for converting the AC power supplied to DC power; characterised in that:
the high harmonic frequency absorption means comprises semiconductor converter circuit means for receiving an output signal from the control circuit means; and
a specific branch load having a large time constant in conjunction with the rest of said loads is arranged for being supplied with DC power from the semiconductor converter circuit means;
wherein the control circuit means is operative for: (i) discriminating a delay angle and an overlap angle respectively representing a null level and rise time in the current waveform of the semiconductor converter circuit means; (ii) determining the high harmonic frequency components; and (iii) adjusting to desired values the delay angle and the overlap angle by controlling the semiconductor switching elements of the semiconductor converter circuit means so as to vary the power supplied to the branch load and so move the determined level of the high harmonic frequency components towards a target value.

It is preferred that the control circuit means comprises: sample and hold circuit means for holding sample values of the electrical parameters measured at predetermined timing by the measurement means; multiplexer means coupled to the sample and hold circuit means, for multiplexing outputs of the sample and hold circuit means; and a microprocessor, coupled to the multiplexer means, for determining the control delay angle in response to the output of the multiplexer means.

Further preferred features are set out in Claims 2 to 8.

BRIEF DESCRIPTION OF THE DRAWINGS

The novel features which are believed to be characteristic of this invention are set forth with particularity in the appended claims. This invention itself, however, both as to its organization and method of operations thereof, together with further objects and advantages thereof, may best be understood from the detailed description of the preferred embodiment in connection with the accompanying drawings, in which:

Fig. 1 is a circuit block diagram of a conventional higher harmonics suppression system;
Fig. 2 shows representative waveforms in a 3-phase thyrister bridge type converter circuit;
Fig. 3 is a circuit block diagram of a thyrister converter system with higher harmonics suppression according to this invention;
Fig. 4 is a circuit block diagram showing an implementation of the thyrister converter system of Fig. 3; and
Fig. 5 is a flow chart showing the operation of the control circuit of converter system of Fig. 4, wherein Figs. 5(A) and 5(B) show the first and the second half of the operation procedure, respectively.

In the drawings, like reference numerals represent like or corresponding parts or elements.

DETAILED DESCRIPTION OF THE PREFERRED EMBODIMENTS

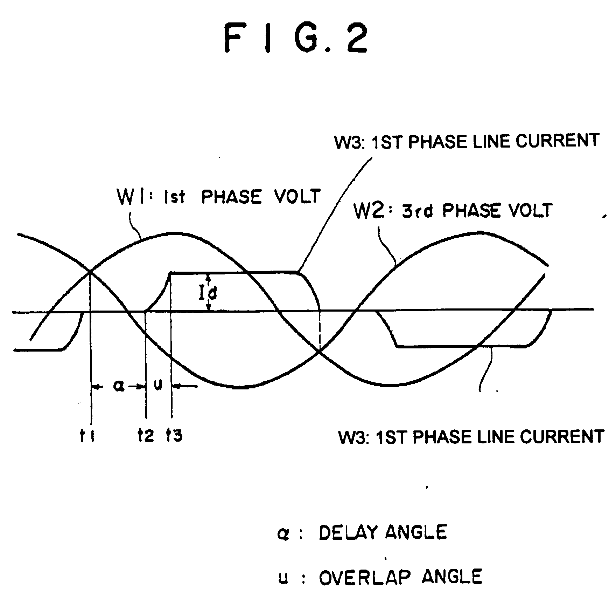

First, the principle of this invention is described by reference to Fig. 2, which shows the voltage and current waveforms of a 3-phase bridge type thyrister converter circuit (rectifier circuit) for rectifying an AC power into a DC power. In Fig. 2, curves W1 and W2 represent the first and the third phase source voltage, respectively; curve W3, the first phase line current, i.e., the current through a thyrister converter circuit element (an arm of the thyrister bridge circuit) corresponding to the first phase.

As shown in Fig. 2, the first phase line current W3 is null during the delay time $\alpha$ (corresponding to the control delay angle $\alpha$ ) from the time point t1 at which the first and the third phase voltage waveforms W1 and W3 cross each other such that the magnitude of W1 become larger than that of W2.

From the time point t2 at the end of the delay time $\alpha$, the first phase line current W3 gradually increases during the rise time u (corresponding to the overlap angle u), to reach the stable constant value Id at the time point t3 at the end of the rise time u. In the case where the overlap angle u is not negligibly small, it is well known that the overlap angle u is expressed as follows:

$$u = -\alpha + \cos^{-1}\{\cos\alpha - (6Xs Id)/(\pi\, Ed_0)\} \tag{1}$$

where:

$\alpha$ is the delay angle;
Id is the DC circuit current;
$Ed_0$ is the average DC voltage under the no-load/no-control condition, which is equal to about 2.34 Vs;
Xs is the reactance of the power supply side (i.e., the commutation reactance per phase); and
Vs is the applied AC line voltage (i.e., the effective value of the source phase voltage).

If, for the purpose of varying the output of the converter to the load side, the delay angle $\alpha$ or the value of the load itself is varied, the overlap angle u is stabilized to the value which satisfies the above equation (1).

During these changes, the reactance Xs behind power source side can be regarded as substantially constant.

EP 0 419 217 B1

Thus, taking the differential of the above equation (1), we obtain:

$$\{\sin(u + \alpha) - \sin \alpha\}\Delta\alpha$$

$$= (6Xs/\pi Ed_0)\{Id - (\Delta Ed_0 Id/Ed_0)\}$$

from which, on the assumption that $\Delta Ed_0 = 0$, the following equation (2) is obtained:

$$Xs = (\pi/6)Ed_0(\Delta\alpha/\Delta Id) \{\sin(u + \alpha) - \sin \alpha\} \tag{2}$$

Thus, the reactance Xs of the power supply side can be determined by means of this equation (2) if the variation $\Delta Id$ of the DC current Id corresponding to the variation of the load is known.

By utilizing the value of the reactance Xs of the power supply side obtained as described above, the relation between the control delay angle $\alpha$ and the overlap angle u can be determined uniquely by means of the following equation (3):

$$\cos \alpha - \cos(\alpha + u) = (6XsId)/(\pi Ed_0) \tag{3}$$

Generally speaking, the higher harmonics contents (the ratios of the higher harmonics components with respect to the fundamental component) contained in the input waveform of the converter circuit consisting of the 3-phase thyristor bridge decrease as the overlap angle u increases. As is well known to those skilled in the art, the exact relation between the higher harmonics contents and the overlap angle u can be determined on the basis of Fourier analysis. It can thus generally be concluded that the higher harmonics contents decrease rapidly when the overlap angle u increases from 0 to 30 degrees.

If the delay angle $\alpha$ is fixed to a predetermined value, the overlap angle u is determined by the state of the connected load (i.e., the values of the DC current Id and voltage $Ed_0$) and the state of the power supply side (i.e., the value of reactance Xs). Further, the higher harmonics contents can be calculated on the basis of the delay angle $\alpha$ and overlap angle u.

Thus, as described above, in the bridge type converter circuit for rectifying AC into DC power, the overlap angle u is determined from the states of the load and the power source side, when the delay angle $\alpha$ is varied, and hence the higher harmonics contents can thereby be modified.

When the overlap angle u and the delay angle $\alpha$ are controlled as described above, the input to the load, i.e., the amount of heat or the amount of electric quantity (i.e., electric charge), varies when observed with respect to short periods of time. The accumulative amount of heat or electric quantity, which is proportional to the time integral of the power or the current applied to the load, can be adjusted to a predetermined value required by the load, if the magnitude of the AC input is adjusted by means of an appropriate regulator means such as an IVR (induction voltage regulator). In the following, the method of this adjustment is described in the case where (1) the load is a resistance heater or incadescent lamp, and where (2) the load is a rectifier driven load.

(1) In the case where the load is a resistance heater or an incandescent lamp, the adjustment and regulation of the amount of heat generated therein may be affected as follows.

When a current including higher harmonics is supplied to the load, the input current I to the load may be expressed as follows:

$$I = I_0 + I_1 \sin(\omega t + \alpha_1) + I_2 \sin (2\omega t + \alpha_2) +$$

$$\cdots\cdots\cdots\cdots + I_n \sin (n\omega t + \alpha_n)$$

Thus, the square of I is:

4

$$I^2 = I_0{}^2 + (1/2)(I_1{}^2 + I_2{}^2 + \cdots\cdots + I_n{}^2)$$

$$+ 2\{I_0 I_1 \sin(\omega t + \alpha 1)$$
$$+ I_1 I_2 \cos(3\omega t + \alpha_1 + \alpha_2)$$
$$+ \cdots\cdots\cdots\cdots\cdots\cdots\cdots\cdots\cdots$$
$$+ I_{n-1} I_n \cos((2n - 1)\omega t + \alpha_{n-1} + \alpha_n)\}$$

$$- (1/2)\{I_1{}^2 \cos(2\omega t + 2\alpha_1)$$
$$+ I_2{}^2 \cos(4\omega t + 2\alpha_2)$$
$$+ \cdots\cdots\cdots\cdots\cdots\cdots$$
$$+ I_n{}^2 \cos(2n\omega t + 2\alpha_n)\}$$

On the other hand, the amount of heat W expressed in P.U. can be given as follows:

$$W = \int_0^{nT} I^2 \, dt$$

Thus,

$$W = \int_0^{nT} \{I_0^2 + (1/2)(I_1^2 + I_2^2 + \cdots\cdots + I_n^2)\}\, dt$$

$$+ 2 \int_0^{nT} \{I_0 I_1 \sin(\omega t + \alpha_1)$$

$$+ I_1 I_2 \cos(3\omega t + \alpha_1 + \alpha_2)$$

$$\cdots\cdots\cdots\cdots\cdots\cdots\cdots\cdots$$

$$\cdots\cdots\cdots\cdots\cdots\cdots\cdots\cdots$$

$$+ I_{n-1} I_n \cos((2n - 1)\omega t + \alpha_{n-1} + \alpha_n)\}\, dt$$

$$- (1/2) \int_0^{nT} \{I_1^2 \cos(2\omega t + 2\alpha_1)$$

$$+ I_2^2 \cos(4\omega t + 2\alpha_2)$$

$$\cdots\cdots\cdots\cdots\cdots\cdots$$

$$\cdots\cdots\cdots\cdots\cdots\cdots$$

$$+ I_n^2 \cos(2n\omega t + 2\alpha_n)\}\, dt$$

wherein the second and the third integral term ranging over an interval which is an integral multiple nT of the period T, and hence both tend to zero. Consequently,

$$W = \{I_0^2 + (1/2)(I_1^2 + I_2^2 + \cdots\cdots + I_n^2)\}\, nT$$

wherein the amplitudes $I_0$, $I_1$, $I_2$, ...., $I_n$ of the higher harmonics contained in the input can be determined uniquely. Hence, in the case where the load is a resistance heater, etc., the heat generated in the load can be adjusted only by adjusting the amplitudes of the input containing higher harmonics.

(2) On the other hand, in the case where the load is a rectifying type load such as battery charger or an electrolytic cell, the adjustment and regulation of the accumulative amount of electric quantity (electric charge) supplied thereto may be affected as follows.

As in the above case, the input current I to the load may be expressed as follows:

$$I = I_0 + I_1 \sin(\omega t + \alpha_1) + \cdots + I_n \sin(n\omega t + \alpha_n)$$

Thus, the absolute value of I is:

$$|I| = |I_0 + I_1 \sin(\omega t + \alpha_1) + \cdots + I_n \sin(n\omega t + \alpha_n)|$$

Consequently, the accumulative amount of electric quantity or the effective input C to the load is:

$$C = \int_{0}^{nT} |I| \; dt$$

$$= \int_{0}^{nT} \{|I_0 + I_1 \; \sin(\omega t + \alpha_1)$$

$$+ I_2 \; \sin \; (2\omega t + \alpha_2) \; +$$

$$\cdots\cdots\cdots\cdots\cdots$$

$$\cdots\cdots\cdots\cdots\cdots$$

$$+ I_n \; \sin \; (n\omega t + \alpha_n)|\} \; dt$$

wherein the n'th harmonic component $C_n$ of C is:

$$C_n = \int_{-\delta}^{T-\delta} |I_n| \; dt$$

$$= \int_{-\delta}^{T-\delta} |I_n \; \sin(n\omega t + \alpha_n)| \; dt$$

$$= \int_{-\delta}^{T-\delta} \{(2I_n/\pi) - (4I_n/3\pi) \; \cos 2\omega t$$

$$- 4I_n \; \cos 4\omega t - \cdots\cdots\cdots$$

$$\cdots\cdots\cdots\cdots\cdots\cdots$$

$$- (4I_n/(4n^2 - 1)) \; \cos 2n\omega t \, \} \; dt$$

$$= (2I_n/\pi)\cdot T$$

Namely, since the original waveform is a composition of a DC component and even order harmonic components, the average thereof is equal to the integral of the DC components. Thus,

$$C = \int_0^{nT} |I|\ dt$$

$$= \int_0^{nT} \{|I_0| + |I_{10}| + |I_{20}| + \cdots + |I_{n0}|\}\ dt$$

$$= nT\ \{|I_0| + |I_{10}| + |I_{20}| + \cdots + |I_{n0}|\} \cdot (2/\pi)$$

Thus, the output C after enough number of periods T (exceeding n periods) is affected only by the amplitudes of the each harmonics contained in the input current. Further, each one of the harmonic components $I_1, \ldots, I_n$ contained in the input current is determined uniquely. It can therefore be concluded that in the case where an electrochemical load is connected to the power source, the amount of electricity which is the effective input to the load can be regulated properly only by adjusting the amplitudes of the input.

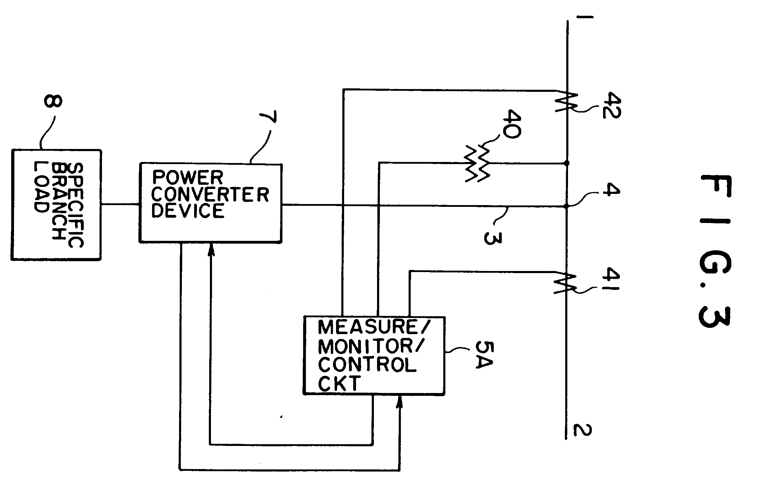

Fig. 3 shows a thyrister converter system with a means for suppressing higher harmonics according to this invention. As in the case of the system of Fig. 1, a branch 3 is connected to an intermediate point 4 between the feeder supply side 1 and a load side 2. The outputs of the instrument transformers 40, 41, and 42, which detect the voltage at the node point, the load current at the side of the user, and the current at the power system side, respectivly, are introduced to the measurement/monitor/control circuit 5A, which measures and monitors the higher harmonics as described hereinbelow. A semiconductor power supply device 7, e.g., a thyrister bridge type converter circuit connected to the node 4 supplies a power to the branch load 8 in response to the output of the control circuit 5A.

The measurement/monitor/control circuit 5A determines, on the basis of the outputs of the potential transformer 40 and the current transformers 41 and 42, etc., the voltage and the currents containing higher harmonics which are present in the power; on the basis of these determinations, the control circuit 5A controls the thyrister converter circuit 7 when necessary. As a result of this, the electrical input applied to the load 8 becomes somewhat different from that which should have been introduced thereto under no control. However, when the power system under consideration is viewed as a whole, the input conditions which the load connected thereto requires is satisfied, such that the higher harmonics contents can substantially be reduced without affecting the intrinsic operations of the load, as described in detail hereinbelow.

It is noted in particular that when the measurement/monitor/control circuit 5A has a precise control performance comparable to that of the active filter which has hitherto been used for higher harmonics suppression, the higher harmonics contents of current fed can be reduced sufficiently to magnitudes substantially equal to the nominal low levels.

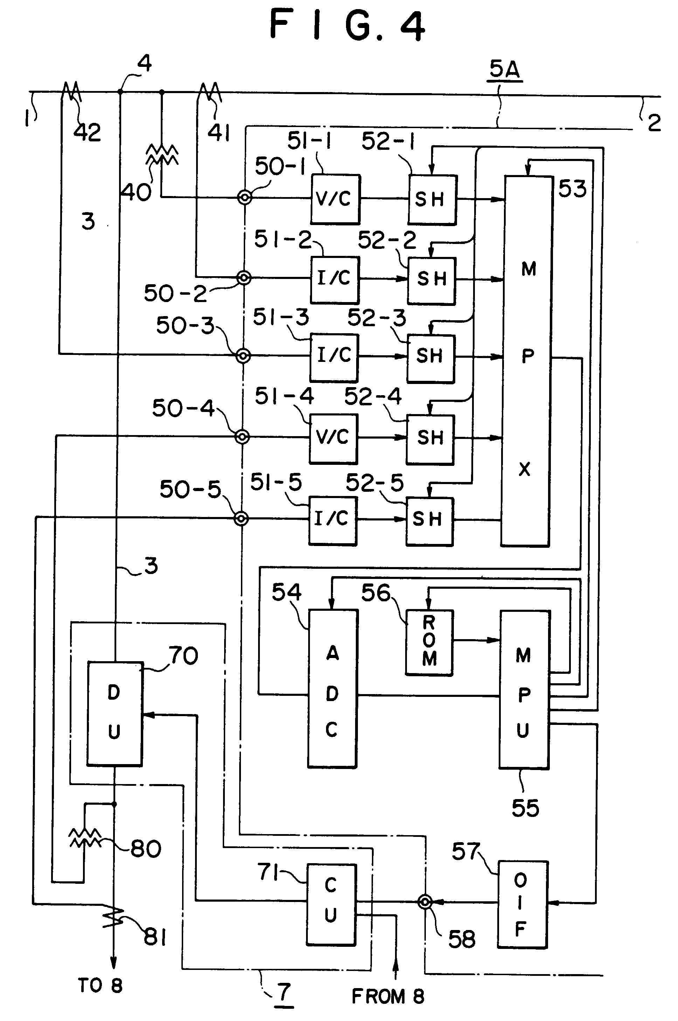

Fig. 4 shows an example of the instrumentation of the control circuit 5A, together with details of other circuit elements. As shwon in Fig. 4, the control circuit 5A comprises input terminals 50-1 through 50-5. To the input terminals 50-1 through 50-3 are introduced the outputs of the transformers 40 through 42, respectively; on the other hand, to the input terminals 50-4 and 50-5 are given the outputs of a potential transformer 80 and a current transformer 81 respectively, as described hereinbelow. Converters 51-1 through 51-5, coupled to the input terminals 50-1 through 50-5, respectively, convert the voltages and the currents inputted to the respective input terminals to corresponding voltages of appropriate magnitudes. The sample hold amplifiers 52-1 through 52-5, connected to the converters 51-1 through 51-5, respectively, hold and store therein at proper instance the respective outputs of the converters connected thereto. A multiplexer 53 connected to the sample hold amplifiers 52-1 through 52-5 switches over(i.e., successively changes over) the outputs of the analog outputs of the sample and hold amplifiers, so as to supply the multiplexed analog outputs of the sample hold amplifiers to the A/D converter 54. The A/D converter 54 converts into a corresponding digital output the multiplexed analog sample voltages received from the multiplexer 53. A microprocessor 55 receives this digital output from the A/D converter 54 and performs predetermined logical and arithmetic operations thereon. The ROM 56 stores, for example, the trigonometric functions table in a tabular data form, so as to offer an auxiliary memory means for the numerical operations of the microprocessor 55. An output interface 57, consisting of a so-called level-converter circuit, is provided for yielding via the output terminal 58 the results of the judgements of the microprocessor 55 obtained from the operations thereof. The above component parts 50 through 58 are comprised in the measurement/monitor/ control circuit 5A.

Also as shown in Fig. 4, the thyrister bridge type converter circuit 7 comprises: a power converter circuit unit 70 utilizing thyristers or transistors as switching elements, and a control circuit unit 71. The control unit 71, having an input connected to the outut terminal 58 of the control circuit 5A, generates, in response to the result of the judgement of the microprocessor 55 received via the interface 57 and output terminal 58 of the control 5A, a wave-shaped pulse signal to control the converter firing circuit unit 70. Further, the control circuit unit 71 comprises another input coupled to a feedback from the load 8, etc. The potential transformer 80 and the currrent transformer 81 measure the voltage and the current supplied to the branch load 8, respectively. The outputs of these transformers 80 and 81 are given to the control circuit 5A via the input terminals 50-4 and 50-5, respectively.

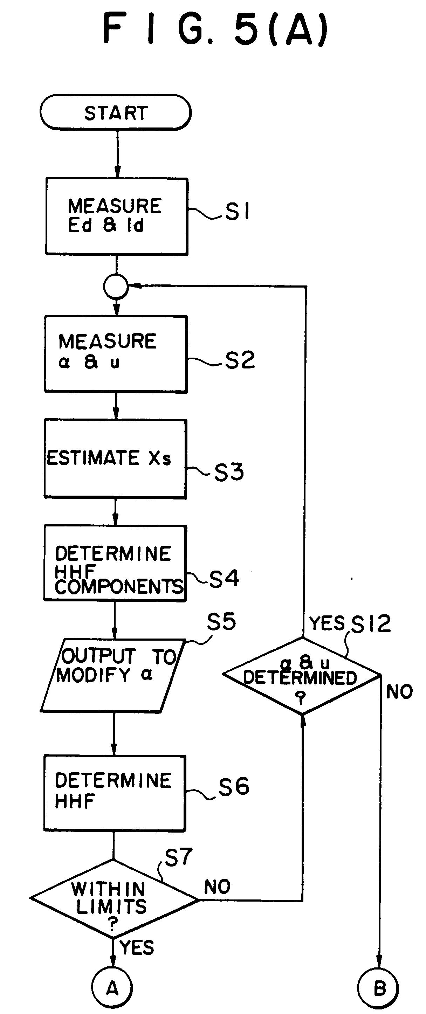

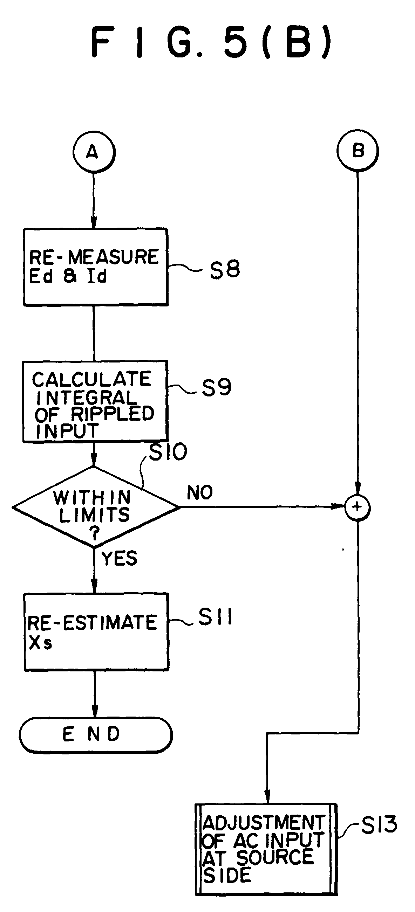

Fig. 5 is the flow chart showing the operations of the embodiment according to this invention as shown in Figs. 3 and 4, wherein Fig. 5(A) and Fig. 5(B) show the first and the second half, respectively.

Thus, at step S1, the voltage Ed and the current Id at the output side of the thyrister converter circuit 7 are measured.

Next, at step S2, from the instantaneous values of the voltages and currents which are taken into the microprocessor 55 of the control circuit 5A, the values thereof of the power supply side 1, the load side 2, and the branch load side 8 are measured, and the control delay angle $\alpha$ and the overlap angle u are determined.

Further, at step S3, utilizing the voltage Ed and current Id as determined at step S1, and the delay angle a and the overlap angle u as determined at step S2, the reactance Xs of the power supply side 1 is estimated by means of the equation (2) above.

At the next step S4, utilizing the waveform data obtained as described above, HHF (high harmonic frequency components), i.e., the higher harmonics contents (especially the 5th and 7th harmonic contents which are predominant) contained in the voltage and the current at power supply side 1 are calculated and determined.

When the higher harmonics contents as determined at step S4 are larger than the predetermined target values thereof, appropriate set values of the delay angle $\alpha$ and the overlap angle u are selected on the basis of a numerical table which is calculated beforehand and is stored in the read-only-memory such as the ROM 56. It is noted in this connection that the relation between the higher harmonics contents and the control delay angle $\alpha$ and the overlap angle u can be determined, as described above, in a graphical form when the value of the reactance Xs is known. When it is judged that reductions of the higher harmonics contents to appropriate levels thereof can be efficient, the delay angle $\alpha$ of the power converter unit 70 is modified properly at step S5 in response to the output from the control circuit unit 71 in the thyrister converter circuit 7.

Next, at step S6, the HHF or higher harmonics contents are discriminated as in the step S4.

At next step 57, it is discriminated whether the higher harmonics contents as determined above are within predetermined allowable range.

When the judgement at step S7 is acceptable, the voltage Ed and the current Id at the side of the load 8 are measured again at step S8; further, at the subsequent step S9, the time integral of the input variation to the load 8 is calculated. Furthermore, at step S10, it is discriminated whether or not the integral of the input variation to the load side as determined above is within a predetermined allowable limits. When the discrimination at step S10 is of no problem, the reactance Xs of the power source 1 is estimated again, thereby ending the series of operations.

On the other hand, when the adjustment of the value of the delay angle $\alpha$ at step S5 is not appropriate, and hence the reductions of the higher harmonics contents to predetermined small levels could not be effected, the delay angle $\alpha$ should be readjusted. Thus, when it is determined at step S7 that the higher harmonics contents as measured are not within the predetermined allowable range, the control proceeds to step S12 where it is judged whether the values of the delay angle $\alpha$ and the overlap angle u satisfying the above equation (3) which reduce the higher harmonics contents below the predetermined levels can be found or not. If the condition at step S12 is met, the sequence goes back to the step S2 as described above.

On the other hand, when the condition at step S12 is not met, the procedure goes over to step S13 where the adjustment at the power input side 1 is effected.

Further, when the condition at step S10 and S12 are not met (i.e., when it is judged that the harmonics contents as determined are not within the allowable limits and besides the solution of delay angle $\alpha$ and angle of overlap u satisfying equation (3) can not be found), the procedure goes over to step S13 where the input adjustment at the power supply side 1 is effected.

Generally, when there are no great variations at the power and load sides, the values of the delay angle $\alpha$ and the overlap angle u satisfying the above equation (3) can be determined such that higher harmonics contents are kept under predetermined levels and such that the integral of the input variation to the load 8 is maintained within allowable limits. When, however, there are great variations at the power source or the load side, the input adjustments by means of external source adjustment device are effected at step S13.

And also, when there is some wave shape distortion in the supply voltage and current of the power system, more elaborate wave shape adjustment fitted to the distorted supply shall be employed in place of the above procedures. The technique for such an adjustment is already known as the control means of the active filters. Even in this case, the specific load is not affected by the output from the converter device, thus assuring the wave shape compensation of the input current and voltage fed to the converter system.

The philosophy of this invention is applicable with the modification of the control means when the above distortion can not be ignored.

**Claims**

1. A converter system for higher harmonics suppression, adapted to be coupled to the intermediate point between an AC power source and loads, said converter system comprising:

   measurement means (41,42) for measuring electrical parameters at the power source side (1) and the loads side (2);

   control circuit means (5A), having inputs coupled to outputs of the measurement means and outputs coupled to high harmonic frequency absorption means (7,8), wherein the control circuit means is operative for controlling the high harmonic frequency absorption means to reduce higher harmonics contained in the power source side, the high harmonic frequency absorption means also being operative for converting the AC power supplied to DC power; characterised in that:

   the high harmonic frequency absorption means (7,8) comprises semiconductor converter circuit means (7) for receiving an output signal from the control circuit means (5A); and

   a specific branch load (8) having a large time constant in conjunction with the rest of said loads is arranged for being supplied with DC power from the semiconductor converter circuit means (7);

   wherein the control circuit means (5A) is operative for: (i) discriminating a delay angle ($\alpha$) and an overlap angle (u) respectively representing a null level and a rise time in the current waveform of the semiconductor converter circuit means (7); (ii) determining the high harmonic frequency components; and (iii) adjusting to desired values the delay angle ($\alpha$) and the overlap angle (u) by controlling the semiconductor switching elements of the semiconductor converter circuit means (7) so as to vary the power supplied to the branch load (8) and so move the determined level of the high harmonic frequency components towards a target value.

2. A converter system for higher harmonics suppression according to Claim 1, wherein the control circuit means (5A) is operative for determining the delay angle ($\alpha$) and the overlap angle (u) being determined in dependence on the reactance (Xs) of the power supply side (1), the values of voltage ($Ed_0$) and current (Id) supplied to the branch load (8).

3. A converter system for higher harmonics suppression according to Claim 1, wherein the control circuit means (5A) is operative for determining the desired delay angle ($\alpha$) and the overlap angle (u) from a memory (56) according to the departure of the high harmonic frequency components from a predetermined target.

4. A converter system as claimed in Claim 1, wherein the reactance (Xs) is determined according to the following relation:

$$Xs = (\pi/6)Ed_0(\Delta\alpha/\Delta\,Id)\{\sin(u+\alpha)-\sin\alpha\};$$

   where $\Delta\alpha$ and $\Delta\,Id$ represents changes in the delay angle $\alpha$ and current Id.

5. A converter system for higher harmonics suppression according to Claim 1, Claim 2 or Claim 3, wherein the determination as to whether the delay angle ($\alpha$) and the overlap angle (u) are desirable or not involves judging whether these values satisfy the following relationship:

$$\cos\alpha - \cos(\alpha+u) = (6XsId)/(\pi Ed_0)$$

6. A converter system as claimed in any preceding claim, wherein measurement means (41,42) comprises instrument transformers for measuring voltages and currents at the power source side (1) and the loads side (2).

7. A converter system as claimed in any preceding claim, wherein the semiconductor switching elements comprise thyristers or transistors, carrying the specific loads having large time constants.

8. A converter system as claimed in any preceding claim, wherein the control circuit means (5A) comprises: sample and hold circuit means (52-1 to 52-5) for holding sample values of the electrical parameters measured at predetermined time points by the measurement means; multiplexer means (53) coupled to the hold circuit means, for multiplexing outputs of the hold circuit means: and a microprocessor (55), coupled to the multiplexer means, for determining the control delay angle ($\alpha$) in response to an output of the multiplexer means.

**Patentansprüche**

1. Wandlersystem zur Unterdrückung von höheren harmonischen Schwingungen, das geeignet ist, an einen Zwischenpunkt zwischen einer Wechselstromquelle und Lasten angeschlossen zu werden, wobei das Wandlersystem folgendes aufweist:

   - eine Meßeinrichtung (41, 42) zum Messen von elektrischen Parametern an der Stromquellenseite (1) und der Lastenseite (2);
   - eine Steuerschaltungseinrichtung (5A), die mit ihren Eingängen an die Ausgänge der Meßeinrichtung angeschlossen ist und deren Ausgänge an eine Absorptionseinrichtung (7, 8) für hohe harmonische Frequenzen angeschlossen sind, wobei die Steuerschaltungseinrichtung wirksam ist, um die Absorptionseinrichtung für hohe harmonische Frequenzen zu steuern, um höhere harmonische Schwingungen zu reduzieren, die an der Stromquellenseite enthalten sind, wobei die Absorptionseinrichtung für hohe harmonische Frequenzen auch wirksam ist, um die zugeführte Wechselstromenergie in Gleichstromenergie umzuwandeln,

   dadurch gekennzeichnet,

   daß die Absorptionseinrichtung (7, 8) für hohe harmonische Frequenzen eine Halbleiter-Wandlerschaltungseinrichtung (7) aufweist, die dazu dient, ein Ausgangssignal von der Steuerschaltungseinrichtung (5A) zu empfangen;
   und daß eine spezifische Abzweiglast (8), welche eine große Zeitkonstante im Zusammenhang mit dem Rest der Lasten hat, derart angeordnet ist, daß sie mit Gleichstromenergie von der Halbleiter-Wandlerschaltungseinrichtung (7) versorgt wird;

   wobei die Steuerschaltungseinrichtung (5A) wirksam ist, um:

   (i) einen Verzögerungswinkel ($\alpha$) bzw. einen Überlappungswinkel (u) zu unterscheiden, die einen Null-Pegel bzw. eine Anstiegszeit in der Stromwellenform der Halbleiter-Wandlerschaltungseinrichtung (7) repräsentieren;
   (ii) hohe harmonische Frequenzkomponenten zu bestimmen; und
   (III) den Verzögerungswinkel ($\alpha$) und den Überlappungswinkel (u) auf gewünschte Werte einzustellen, und zwar durch Steuerung der Halbleiter-Schaltelemente der Halbleiter-Wandlerschaltungseinrichtung (7), um den der Verzweigungslast (8) zugeführten Strom zu variieren und somit den vorgegebenen Pegel der hohen harmonischen Frequenzkomponenten auf einen Sollwert zu bringen.

2. Wandlersystem zur Unterdrückung von höheren harmonischen Schwingungen nach Anspruch 1, wobei die Steuerschaltungseinrichtung (5A) wirksam ist, um den Verzögerungswinkel ($\alpha$) und den Überlappungswinkel (u) zu bestimmen, die in Abhängigkeit von der Reaktanz (Xs) auf der Stromversorgungsseite (1) sowie den Werten der Spannung ($Ed_o$) und des Stromes (Id), welche der Abzweiglast (8) zugeführt werden, bestimmt werden.

3. Wandlersystem zur Unterdrückung von höheren harmonischen Schwingungen nach Anspruch 1, wobei die Steuerschaltungseinrichtung wirksam ist, um den gewünschten Verzögerungswinkel ($\alpha$) und den entsprechenden Überlappungswinkel (u) aus einem Speicher (56) zu bestimmen, und zwar in Abhängigkeit von der Abweichung der hohen harmonischen Frequenzkomponente von einem vorgegebenen Sollwert.

4. Wandlersystem nach Anspruch 1, wobei die Reaktanz (Xs) gemäß der folgenden Relation bestimmt wird:

$$Xs = (\pi/6)Ed_o(\Delta\alpha/\Delta Id)\{\sin(u + \alpha) - \sin\alpha\},$$

   wobei $\Delta\alpha$ und $\Delta Id$ Änderungen beim Verzögerungswinkel $\alpha$ bzw. beim Strom Id bezeichnen.

5. Wandlersystem zur Unterdrückung von höheren harmonischen Schwingungen nach Anspruch 1, 2 oder 3, wobei die Bestimmung, ob der Verzögerungswinkel ($\alpha$) und der Überlappungswinkel (u) wünschenswert sind oder nicht, die Beurteilung impliziert, ob diese Werte die folgende Relation erfüllen:

$$\cos \alpha - \cos(\alpha + u) = (6XsId) / (\pi Ed_o).$$

**6.** Wandlersystem nach einem der vorhergehenden Ansprüche, wobei die Meßeinrichtung (41, 42) Transformatorinstrumente aufweist, um Spannungen und Ströme an der Stromquellenseite (1) und der Lastenseite (2) zu messen.

**7.** Wandlersystem nach einem der vorhergehenden Ansprüche, wobei die Halbleiter-Schaltelemente Thyristoren oder Transistoren aufweisen, welche die spezifischen Lasten mit großen Zeitkonstanten tragen.

**8.** Wandlersystem nach einem der vorhergehenden Ansprüche, wobei die Steuerschaltungseinrichtung (5A) folgendes aufweist:

Abtast- und Halteschaltungseinrichtungen (52-1 bis 52-5), um Abtastwerte der elektrischen Parameter zu halten, die zu vorgegebenen Zeitpunkten von der Meßeinrichtung gemessen werden;
eine Multiplexereinrichtung (53), die an die Halteschaltungseinrichtungen angeschlossen ist, um die Ausgangssignale der Halteschaltungseinrichtungen im Multiplexbetrieb abzugeben; und
einen Mikroprozessor (55), der an die Multiplexereinrichtung angeschlossen ist, um den Steuerverzögerungswinkel ($\alpha$) in Abhängigkeit von einem Ausgangssignal von der Multiplexereinrichtung zu bestimmen.

## Revendications

**1.** Un système convertisseur pour la suppression d'harmoniques supérieurs, adapté pour être connecté au point intermédiaire entre une source d'énergie alternative et des charges, ce système convertisseur comprenant:

des moyens de mesure (41, 42) pour mesurer des paramètres électriques du côté de la source d'énergie (1) et du côté des charges (2):
une structure de circuit de commande (5A), ayant des entrées connectées à des sorties des moyens de mesure et des sorties connectées à des moyens d'absorption de fréquences harmoniques élevées (7, 8), cette structure de circuit de commande commandant les moyens d'absorption de fréquences harmoniques élevées de façon à réduire les harmoniques supérieurs qui sont présents du côté de la source d'énergie, les moyens d'absorption de fréquences harmoniques élevées ayant également pour action de convertir en énergie continue l'énergie alternative qui est fournie; caractérisé en ce que:
les moyens d'absorption de fréquences harmoniques élevées (7, 8) comprennent une structure de circuit convertisseur à semiconducteurs (7) destinée à recevoir un signal de sortie de la structure de circuit de commande (5A); et
une charge en dérivation (8) spécifique, ayant une grande constante de temps par rapport au reste des charges, est adaptée pour être alimentée par de l'énergie continue provenant de la structure de circuit convertisseur à semiconducteurs (7);
dans lequel la structure de circuit de commande (5A) accomplit les actions suivantes: (i) elle détermine un angle de retard ($\alpha$) et un angle de chevauchement (u) représentant respectivement un niveau zéro et un temps de montée dans la forme d'onde de courant de la structure de circuit convertisseur à semiconducteurs (7); (ii) elle détermine les composantes de fréquences harmoniques élevées; et (iii) elle règle aux valeurs désirées l'angle de retard ($\alpha$) et l'angle de chevauchement (u), en commandant les éléments de commutation à semiconducteurs de la structure de circuit convertisseur à semiconducteurs (7), de façon à faire varier la puissance qui est fournie à la charge en dérivation (8) et à déplacer ainsi vers une valeur désirée le niveau déterminé des composantes de fréquences harmoniques élevées.

**2.** Un système convertisseur pour la suppression d'harmoniques supérieurs selon la revendication 1, dans lequel la structure de circuit de commande (5A) détermine l'angle de retard ($\alpha$) et l'angle de chevauchement (u) sous la dépendance de la réactance (Xs) du côté de la source d'énergie (1), et les valeurs de tension ($Ed_o$) et de courant (Id) sont fournies à la charge en dérivation (8).

**3.** Un système convertisseur pour la suppression d'harmoniques supérieurs selon la revendication 1, dans lequel la structure de circuit de commande (5A) détermine l'angle de retard désiré ($\alpha$) et l'angle de chevauchement (u) à partir d'une mémoire (56), conformément à l'écart des composantes de fréquences harmoniques élevées par rapport à un objectif prédéterminé.

**4.** Un système convertisseur selon la revendication 1. dans lequel la réactance (Xs) est déterminée conformément à la relation suivante:

$$Xs = (\pi/6)Ed_o(\Delta\alpha/\Delta Id)\{sin(u+\alpha)-sin\alpha\}$$

dans laquelle $\Delta\alpha$ et $\Delta Id$ représentent des variations de l'angle de retard $\alpha$ et du courant Id.

**5.** Un système convertisseur pour la suppression d'harmoniques supérieurs selon la revendication 1, la revendication 2 ou la revendication 3, dans lequel la détermination du fait que l'angle de retard ($\alpha$) et l'angle de chevauchement (u) ont des valeurs souhaitables ou non, s'effectue en déterminant si ces valeurs satisfont la relation suivante:

$$cos\alpha-cos(\alpha+u) = (6XsId)/(\pi Ed_o)$$

**6.** Un système convertisseur selon l'une quelconque des revendications précédentes, dans lequel les moyens de mesure (41. 42) comprennent des transformateurs de mesure pour mesurer des tensions et des courants du côté de la source d'énergie (1) et du côté des charges (2).

**7.** Un système convertisseur selon l'une quelconque des revendications précédentes, dans lequel les éléments de commutation à semiconducteurs comprennent des thyristors ou des transistors, alimentant les charges spécifiques ayant de grandes constantes de temps.

**8.** Un système convertisseur selon l'une quelconque des revendications précédentes. dans lequel la structure de circuit de commande (5A) comprend: une structure de circuit échantillonneur-bloqueur (52-1 à 52-5) pour bloquer des valeurs d'échantillons des paramètres électriques qui sont mesurés par les moyens de mesure à des instants prédéterminés; des moyens multiplexeurs (53) connectés à la structure de circuit bloqueur, pour multiplexer des signaux de sortie de la structure de circuit bloqueur; et un microprocesseur (55), connecté aux moyens multiplexeurs, pour déterminer l'angle de retard de commande ($\alpha$) sous la dépendance d'un signal de sortie des moyens multiplexeurs.

# F I G. I

# F I G. 2

W3: 1ST PHASE LINE CURRENT

W1: 1st PHASE VOLT

W2: 3rd PHASE VOLT

Id

α → u

t1    t2 t3

W3: 1ST PHASE LINE CURRENT

α :  DELAY ANGLE

u :  OVERLAP ANGLE

EP 0 419 217 B1

# F I G. 3

# F I G. 4

# F I G. 5(A)

START

MEASURE Ed & Id — S1

MEASURE α & u — S2

ESTIMATE Xs — S3

DETERMINE HHF COMPONENTS — S4

S5
OUTPUT TO MODIFY α

DETERMINE HHF — S6

WITHIN LIMITS ? — S7
NO
YES

A

YES S12
α & u DETERMINED ?
NO

B

# F I G. 5 (B)